(19) Europäisches Patentamt
European Patent Office
Office européen des brevets

(11) Veröffentlichungsnummer: **0 212 542**
**A2**

(12) **EUROPÄISCHE PATENTANMELDUNG**

(21) Anmeldenummer: **86111128.4**

(51) Int. Cl.⁴: **C08G 81/02**

(22) Anmeldetag: **12.08.86**

(30) Priorität: **21.08.85 DE 3529866**

(43) Veröffentlichungstag der Anmeldung:
**04.03.87 Patentblatt 87/10**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Taubitz, Christof, Dr.**
**In der Dreispitz 15**
**D-6706 Wachenheim(DE)**
Erfinder: **Seiler, Erhard, Dr.**
**Erpolzheimer Strasse 1**
**D-6700 Ludwigshafen(DE)**
Erfinder: **Hambrecht, Juergen, Dr.**
**Am Klosterwald 31**
**D-4400 Muenster-Hiltrup(DE)**

# (54) Copolymere (Kammpolymere) mit einem Polymeren A als Hauptkette und einem durch anionische Polymerisation erhaltenen Polymeren B als Nebenkette.

(57) Die Erfindung betrifft Copolymere (Kammpolymere) mit mittleren Molekulargewichten (Gewichtsmittel $\bar{M}_w$ ) von 10.000 bis 2 Millionen, aufgebaut aus:

A einem Polymeren einer Hauptkette, die 10 bis 90 Gew.%, bezogen auf das Copolymere, ausmacht und ein mitteres Molekulargewicht ( $\bar{M}_w$) von 8.000 bis 1 Million aufweist und das einpolymerisiert enthält

$a_1$ mindestens eine vinylaromatische Monomereinheit

und

$a_2$ mindestens eine weitere Monomereinheit

und

B mindestens einem oder mehreren Polymeren einer Nebenkette, wobei die Nebenketten 90 bis 10 Gew.%, bezogen auf das Copolymere, ausmachen und ein mittleres Molgewicht ( $\bar{M}_w$) von 2.000 bis 1 Million aufweisen und erhältlich sind durch anionische Polymerisation an sich bekannter Monomerer oder Gemischen von Monomeren mit Hilfe von Li-Alkylen unter anschließender Umsetzung des lebenden Anions mit einem Abbruchmittel Charakteristikum ist,

daß zum Aufbau des Polymeren A (Hauptkette) die weitere Monomereinheit $a_2$ aus der Gruppe der $\alpha,\beta$-ungesättigten Säuren, deren Estern, Halbestern oder Imiden ausgewählt wird und die Verknüpfung des Polymeren der Hauptkette A über mindestens eine Monomereinheit $a_2$ mit den Polymeren B der Nebenkette über eine vom Abbruchmittel gebildete funktionelle Gruppe erfolgt.

Die Copolymeren finden Verwendung zur Mischung mit anderen Polymeren und zur Herstellung von Formteilen.

EP 0 212 542 A2

## Copolymere (Kammpolymere) mit einem Polymeren A als Hauptkette und einem durch anionische Polymerisation erhaltenen Polymeren B als Nebenkette

Die Erfindung betrifft ein Copolymeres (Kammpolymeres) mit mittleren Molekulargewichten (Gewichtsmittel $\bar{M}_w$) von 10.000 bis 2 Millionen. Das Copolymere ist aufgebaut aus

A einem Polymeren einer Hauptkette, die 10 bis 90 Gew.%, bezogen auf das Copolymere ausmacht und ein mitteres Molekulargewicht ($\bar{M}_w$) von 8.000 bis 1 Million aufweist und das einpolymerisiert enthält

$a_1$ mindestens eine vinylaromatische Monomereinheit

und

$a_2$ mindestens eine weitere Monomereinheit

und

B mindestens einem Polymeren einer Nebenkette, wobei die Nebenketten 90 bis 10 Gew.%, bezogen auf das Copolymere, ausmachen und ein mittleres Molgewicht ($\bar{M}_w$) von 2.000 bis 1 Million aufweisen und erhältlich sind durch anionische Polymerisation an sich bekannter Monomerer oder Gemischen von Monomeren mit Hilfe von Li-Alkylen unter anschließender Umsetzung des lebenden Anions mit einem Abbruchmittel.

Durch anionische Polymerisation erhält man bekanntermaßen statistisch aufgebaute Copolymere oder aber Blockpolymere. Diese werden als thermoplastische Massen oder als Elastomere eingesetzt.

Die Blockpolymeren zeichnen sich durch Mikro-Domänenbildung aus, wie dies in A. Noshay, "Block Copolymers", Academic Press, New York, 1977, beschrieben ist. Innerhalb bestimmter Bereiche des Molekulargewichts und bestimmter Verhältnisse in der Zusammensetzung der Blocks kann man elastomere Massen erhalten, die die Eigenschaft der "Selbstvulkanisation" durch Mikrodomänenbildung haben. Sowohl bei den durch anionische Polymerisation hergestellten Homo-, Co-als auch Block-Copolymerisaten wurde bisher konjugierten Dienen, wie Butadien, Isopren, gegebenenfalls hydriert, und vinylsubstituierten aromatischen Kohlenwasserstoffen wie Styrol, der Vorzug gegeben, da man bei der Verwendung anderer Monomerer offenbar keine Produkte mit anwendungstechnischen Eigenschaften bekommt, die in der Praxis eingesetzt werden können.

Durch die beschränkte Auswahl an Monomeren, wie konjugierten Dienen und vinylsubstituierten aromatischen Kohlenwasserstoffen weisen die Produkte zu verbessernde Eigenschaften, wie Chemikalienbeständigkeit, Alterungsbeständigkeit, Wärmeformbeständigkeit und mechanische Werte auf.

Zum Stand der Technik i.e. Sinn nennen wir

(1) Deutsche Patentanmeldung P 34 44 788.1 (EPA 1 ...... O.Z. 0050/37486)

(2) Deutsche Patentanmeldung P 34 44 787.3 (EPA 1 ...... O.Z. 0050/37487)

(3) Deutsche Patentanmeldung P 35 16 070.5 (EPA 1 ...... O.Z. 0050/37711)

In (1) bis (3) sind Kammpolymere aus Haupt- und Nebenketten beschrieben, wobei in (3) bereits die Verwendung von durch anionische Polymerisation erzeugten Nebenketten vorgeschlagen wird. Die bekannten Kammpolymeren sind meist nicht leicht herstellbar und zeigen noch keine ausreichende Stabilität.

Es bestand daher die Aufgabe, die geschilderten Nachteile zu heben.

Die Lösung erfolgt durch Copolymere gemäß Patentanspruch 1.

Die Erfindung betrifft daher Copolymere - (Kammpolymere) mit mittleren Molekulargewichten (Gewichtsmittel $\bar{M}_w$) von 10.000 bis 2 Millionen aufgebaut aus

A einem Polymeren einer Hauptkette, die 10 bis 90 Gew.%, bezogen auf das Copolymere ausmacht und ein mitteres Molekulargewicht ($\bar{M}_w$) von 8.000 bis 1 Million aufweist und das einpolymerisiert enthält

$a_1$ mindestens eine vinylaromatische Monomereinheit

und

$a_2$ mindestens eine weitere Monomereinheit

und

B mindestens einem Polymeren einer Nebenkette, wobei die Nebenketten 90 bis 10 Gew.%, bezogen auf das Copolymere, ausmachen und ein mittleres Molgewicht ($\bar{M}_w$) von 2.000 bis 1 Million aufweisen und erhältlich sind durch anionische Polymerisation an sich bekannter Monomerer oder Gemischen von Monomeren mit Hilfe von Li-Alkylen unter anschließender Umsetzung des lebenden Anions mit einem Abbruchmittel.

Sie sind gekennzeichnet dadurch, daß zum Aufbau des Polymeren A (Hauptkette) die weitere Monomereinheit $a_2$ aus der Gruppe der $\alpha,\beta$-ungesättigten Säuren, deren Estern, Halbestern oder Imiden ausgewählt wird und die Verknüpfung des Polymeren der Hauptkette A über mindestens eine Monomereinheit $a_2$ mit den Polymeren B der Nebenkette über diese vom Abbruchmittel gebildete funktionelle Gruppe erfolgt.

Besonders bevorzugt sind erfindungsgemäße Copolymere aus einer Hauptkette und mehr als einer Nebenkette aus

A 10 bis 90 Gew.% eines Polymeren der Hauptkette, welches enthält

$a_1$ 92 bis 40 Gew.% mindestens einer vinylaromatischen Monomereinheit

$a_2$ 0,05 bis 30 Gew.% mindestens einer $\alpha,\beta$-ungesättigten Dicarboxyl-Gruppen aufweisenden Monomereinheit

$a_3$ 8 bis 45 Gew.% mindestens einer eine Nitrilgruppe aufweisenden Monomereinheit und gegebenenfalls

$a_4$ 1 bis 40 Gew.% weiteren, mit $a_1$ und $a_3$ copolymerisierbaren Einheiten, wobei die Summe $a_1$ bis $a_4$ = 100 Gew.% beträgt,

B 90 bis 10 Gew.% mindestens eines Nebenkettenpolymeren, welches durch anionische Polymerisation hergestellt wird

und gegebenenfalls

C bis zu weniger als 40 Gew.% weiteren Nebenkettenpolymeren, wobei A, B und C = 100 Gew.% ausmachen

und wobei die Nebenketten über Monomereinheiten des Typs $a_2$ an die Hauptkette gebunden sind.

Die erfindungsgemäßen Copolymeren weisen durch die Variabilität der Monomeren in der Hauptkette vorteilhafte Eigenschaften auf. Gegenüber den aus (1) bis (3) bekannten Kammpolymeren zeichnen sich die erfindungsgemäßen Copolymeren durch einfache Herstellbarkeit und große Stabilität aus.

Nachstehend wird der Aufbau der erfindungsgemäßen Copolymeren und seiner wesentlichen Bestandteile, der Polymeren A der Hauptkette und der Polymeren B der Nebenketten beschrieben:

Das Copolymere weist Gesamtmolekulargewichte (alles in Gewichtsmittel $\bar{M}_w$) von 10.000 bis 2 Millionen, insbesondere von 10.000 bis 1 Million und bevorzugt von 20.000 bis 600.000 auf.

Die Molekulargewichte des Polymeren A der Hauptkette, aufgebaut aus der Summe der Struktureinheiten $a_1$ bis $a_4$ betragen im allgemeinen 8.000 bis 1 Million, insbesondere 10.000 bis 200.000.

Die Summe der Molekulargewichte des (der) Polymeren B der Nebenketten liegen im allgemeinen im Bereich von 2.000 bis 1 Million, insbesondere von 2.000 bis 200.000 ($\Sigma$ Molgewichte der Hauptkette und Nebenkette = 100).

Das erfindungsgemäße Copolymere enthält mindestens eine Hauptkette A und mindestens eine Seitenkette B; vorzugsweise enthält es nur eine Hauptkette und mehrere Seitenketten, insbesondere besteht es aus diesen.

1. Die Hauptkette

Die Hauptkette macht, jeweils bezogen auf das Copolymere, 10 bis 90, vorzugsweise 20 bis 80 Gew.% (Rest S der Nebenketten) aus.

Im einzelnen kann man den Aufbau der Hauptkette durch die Teile der Struktureinheit wie folgt beschreiben:

$a_1$: Die Hauptkette enthält mindestens eine einpolymerisierte monovinylaromatische Monomereinheit, insbesondere der allgemeinen Formel

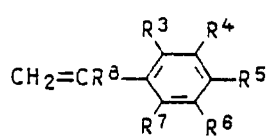

worin $R^3$ bis $R^7$ = H, $C_1$-bis $C_8$-Alkyl, Halogen oder CN und $R^8$ = H oder $C_1$-bis $C_8$-Alkyl ist. Es sind aber auch andere substituierte vinylaromatische Monomere geeignet.

Bevorzugt sind Styrol, $\alpha$-Methylstyrol, o-Methylstyrol, m-Methylstyrol, p-Methylstyrol, Dimethylstyrol, m-Ethylstyrol, Chlorstyrol oder Gemische. Besonders bevorzugt wird Styrol alleine angewendet. Die Einheit $a_1$ ist in der polymeren Einheit der Hauptkette bevorzugt in Mengen von 40 bis 92, besonders bevorzugt von 50 bis 90 Gew.% enthalten.

$a_2$: Die Monomer-Einheit $a_2$ ist mindestens eine $\alpha,\beta$-ungesättigte, Dicarboxyl-Gruppen aufweisende Einheit, wie Maleinsäureanhydrid, Chlormaleinsäureanhydrid, Citraconsäureanhydrid, Butenylbernsteinsäureanhydrid, Tetrahydrophthalsäureanhydrid, Maleinsäure-Imide, Maleinsäure, Fumarsäure und die entsprechenden Halbester und Ester der Säuren. Vorzugsweise wird Maleinsäureanhydrid angewendet, das mit dem (den) Nebenkettenpolymeren B zumindestens teilweise umgesetzt wird, um die Verknüpfung von Haupt-und Nebenketten zu bewirken.

Die Einheit $a_2$ ist bevorzugt in Mengen von 0,05 bis 30 Gew.%, besonders bevorzugt von 2 bis 15 Gew.%, bezogen auf das Hauptkettenpolymere A, enthalten.

$a_3$: Bei der in den polymeren. Einheiten der Hauptkette vorzugsweise vorhandenen Einheit $a_3$ handelt es sich um einpolymerisierte Nitrilgruppen enthaltende Monomere, wie (Meth)acrylnitril. Die Einheit C ist in der polymeren Einheit der Hauptkette in Mengen, bevorzugt von 8 bis 45 %, im besonderen von 15 bis 40 %, enthalten.

$a_4$: Als weitere Monomer-Einheit kann ein Monomeres, welches mit $a_1$ und $a_3$, vorzugsweise mit $a_1$, $a_2$ und $a_3$ copolymerisierbar ist, eingesetzt werden. Geeignet sind Ester der Acrylsäure und Methacrylsäure, beispielsweise Methyl(meth)acrylat, Ethyl(meth)acrylat, Propyl(meth)acrylat, Butyl(meth)acrylat, 2-Ethylhexyl(meth)acrylat, die entsprechenden (Meth)acrylamide, Acrylamide, (Meth)acrylsäure und ähnliche. Bevorzugt wird Methylmethacrylat gemeinsam mit Styrol ($a_1$) MSA - ($a_2$) und AN ($a_3$) angewendet in Mengen von 1 bis 40, vorzugsweise unter 20 Gew.%.

Die Polymeren der Hauptkette können durch übliche Methoden, wie Massepolymerisation, Lösungspolymerisation, Suspensionspolymerisation oder Emulsionspolymerisation hergestellt werden. Eine Herstellmethode ist es, die Monomeren $a_1$, $a_3$ und gegebenenfalls $a_4$ zu copolymerisieren und anschließend das Monomere $a_2$ aufzupfropfen. Nach einer bevorzugten Methode können die Monomeren $a_1$ bis $a_3$ (und gegebenenfalls $a_4$) zusammen copolymerisiert werden. Die Polymerisation kann kontinuierlich oder ansatzweise durchgeführt werden.

2. Die Nebenketten

Die Nebenketten repräsentieren mindestens ein Polymeres oder Copolymeres B das durch anionische Polymerisation gewonnen wird.

Das durch anionische Polymerisation erhaltene (Co)Polymere B der Nebenkette ist in der Regel über die Carboxylgruppe der Monomereinheit $a_2$ an die Hauptkette gebunden. Das Polymere B hat im allgemeinen eine funktionelle Gruppe, mit der es an das Monomere $a_2$ gebunden ist. Es eignen sich besonders Alkohol-und Thioalkohol-Gruppen, aber auch andere, mit dem Monomeren $a_2$ reagierende Gruppen, wie sie dem Fachmann allgemein bekannt sind.

Bevorzugt sind durch anionische Polymerisation hergestellte Polymere B, die eine terminale primäre oder sekundäre Hydroxyl-oder -SH-Gruppe tragen. Diese erhält man in an sich bekannter Weise durch Umsetzung des lebenden Anions des anionisch erzeugten Polymeren mit Ethylenoxid, Ethylensulfid, Propylenoxid oder einem Aldehyd, wie Propionaldehyd als Abbruchmittel.

Die durch anionische Polymerisation erhältlichen Polymeren B sind dem Fachmann bekannt. Bevorzugt sind Polymere B, die aus den Monomeren Butadien, Isopren oder 2,3-Dimethylbutadien, Styrol, α-Methylstyrol, Vinyltoluol, gebildet werden. Besonders bevorzugt sind anionisch erzeugte Polymere des Butadiens, Styrols oder von Butadien und Styrol. Die anionische Polymerisation wird bekanntermaßen vorzugsweise durch Organo-Lithiumverbindungen, wie Buthyl-Lithium gestartet. Die anionischen Polymeren können gegebenenfalls (teil)hydrierte Homopolymere oder Copolymere sein.

Die Copolymeren B können statistisch, verschmiert oder blockartig aufgebaut sein. Die blockartig aufgebauten Polymeren B zeichnen sich durch anwendungstechnisch interessante Eigenschaften aus, da durch Ausbildung von Mikrodomänen z.B. thermoplastische Elastomere erhalten werden.

Bevorzugte Polymere B der Seitenkette sind durch anionische Polymerisation erhaltene Polymere, die aus den Monomeren Styrol, α-Methylstyrol, Vinyltoluol, Butadien und/oder Isopren aufgebaut sind. Bevorzugt sind Polymerisate der allgemeinen Formel

$$K{-}CH_2{-}CH_2{-}OH$$

oder

$$K{-}CH_2{-}CH(OH){-}CH_3$$

wobei K ein durch anionische Polymerisation von vinylaromatischen und/oder 1,3-Dienen erhaltenes Polymerisat ist, wobei es sich um ein Homopolymerisat oder statistisch oder blockartig aufgebautes Copolymerisat handelt, wobei das Polymerisat teilweise oder soweit wie möglich hydriert sein kann.

Solche Polymere sind beispielsweise in M. Morton, "Anionic Polymerisation: Principles and Practice", Academic Press, New York 1983, S. 147 bis 164: "Organolithium Polymerisation of Dienes" beschrieben.

Bevorzugte Polymere B enthalten mindestens 15 Gew.% vinylaromatische Monomere, bevorzugt mehr als 50 Gew.%, bezogen auf B = 100 %.

Zusätzlich zu den Polymeren B der Nebenkette können weitere Nebenkettenpolymere C vorhanden sein, die ebenfalls über eine terminale Gruppe mit dem Monomeren $a_2$ reagieren können. Sie sind im allgemeinen in Mengen unter 40 Gew.%, bezogen auf das erfindungsgemäße Copolymere, enthalten. Beispielhaft seien Polycarbonate, Polysulfone, Polyethersulfone, Polyester und Polyalkylenoxide mit vorzugsweise einer terminalen Hydroxyl-Gruppe genannt.

Zur Herstellung der erfindungsgemäßen Copolymeren werden die Polymeren der Nebenkette B - (und gegebenenfalls C) mit den Polymeren der Hauptkette umgesetzt, wobei die terminale Gruppe der Nebenkettenpolymeren mit dem Monomeren $a_2$ der Hauptkette reagiert. Die Kopplungsreaktion kann in Lösung, Suspension oder Schmelze gegebenenfalls unter Verwendung von Beschleunigern durchgeführt werden.

Die erfindungsgemäßen Copolymeren können nach der Reaktion noch überschüssiges Hauptkettenpolymeres, Nebenkettenpolymeres oder beide Polymere enthalten.

Die erfindungsgemäßen Copolymeren können in der für Styrol-Dien-Blockpolymerisate üblichen Weise mit vinylaromatischen Polymeren, wie niedermolekularen Vinyltoluol-α-Methylstyrolpolymerisaten und aliphatischen Ölen oder Polybutadien- und Polyisopren-Ölen, außerdem mit niedermolekularen NBR-Ölen kombiniert werden.

Die erfindungsgemäßen Copolymeren können in der üblichen Weise modifiziert werden. Sie können daher z.B. Verstärkungs-und Füllstoffe, insbesondere Glasfasern, Flammschutzmittel, Stabilisatoren, Gleit-und Flammschutzmittel sowie Farbstoffe und Pigmente enthalten. Als Verstärkungsmittel können z.B. Glasfasern, Glaskugeln, Kaolin, Quarz, Glimmer, Wollastonit, Talkum, Asbest, Titandioxid, Aluminiumoxid, Micovit, Kreide oder calciniertes Aluminiumsilikat eingesetzt werden.

Die erfindungsgemäßen Copolymeren weisen eine Vielfalt an Eigenschaften auf und zeigen eine Reihe von Vorteilen gegenüber bisher bekannten Block-und Pfropfpolymerisaten. Sie vereinigen die Vorzüge der Mikrophasenstruk turen von Blockpolymerisaten mit der Variabilität der Monomerenwahl bei den Pfropfpolymeren.

Die erfindungsgemäßen Copolymeren können auf herkömmlichen Maschinen durch Formblasen, Extrusion oder Spritzguß verarbeitet werden. Sie können als thermoplastische Kautschuke, Werkstoffe, Schmelzkleber, Verträglichmacher bei Polymerblends, Mineralöladditive und zur Herstellung photopolymerer Druckplatten eingesetzt werden. In Kombination mit anderen Thermoplasten können sie zur Verbesserung der Zähigkeit, der Fließeigenschaften und des Oberflächenbildes verwendet werden. Sie eignen sich als Abmischkomponente für Polymerblends.

Die in den Beispielen und Versuchen beschriebenen Parameter wurden wie folgt bestimmt:

Das Gewichtsmittel des Molgewichts $\bar{M}_w$ wird gemessen durch Gelpermeationschromatographie in 0,25 gew.%iger Tetrahydrofuranlösung bei 23°C und einer Durchflußgeschwindigkeit von 1,2 ml/min (vgl. G. Glöckner, "Polymercharakterisierung durch Flüssigkeits-Chromatographie", Verlag A. Hüttig, Heidelberg, 1982).

Für die Herstellung von erfindungsgemäßen Copolymeren wurden die nachstehend beschriebenen Produkte verwendet.

1. Herstellung von Nebenkettenpolymeren $B_1$ bis $B_6$ durch anionische Polymerisation und Umsetzung mit Abbruchmittel

Nebenkettenpolymeres $B_1$

In einem 10 l Rührkessel werden 5230 g Toluol und 1100 g Butadien unter $N_2$-Atmosphäre und unter Ausschluß jeglicher Feuchtigkeit vorgelegt und anschließend auf 45°C erwärmt. Zur Beseitigung von Verunreinigungen, die den metallorganischen Initiator (sek.-Butyllithium) zerstören, wird die Reaktionsmischung solange portionsweise (5 ml) mit dem Initiator (1,2 Gew.% sek.-Butyllithium in Pentan) versetzt, bis ein Temperaturanstieg um ca. 0,5°C das Einsetzen der Polymerisation anzeigt. Durch unverzügliche Zugabe von 160 mmol Initiator wird jetzt die Polymerisation gestartet, die Kesselheizung wird auf 60°C eingestellt. Unter diesen Bedingungen wird 1 h lang polymerisiert. Anschließend wird die Polymerisation durch Zugabe

von 190 mml Ethylenoxid (5 %ig, gelöst in Toluol) abgebrochen. Das Molekulargewicht beträgt $\bar{M}_w$ = 7.200.

Nebenkettenpolymeres $B_2$

Es wird analog $B_1$ ein Polystyrolpolymeres hergestellt, welches mit Ethylenoxid umgesetzt wird.

Nebenkettenpolymeres $B_3$

Es wird analog $B_1$ zuerst Styrol und anschließend Butadien zu einem Zweiblockcopolymeren polymerisiert, wobei mit Ethylenoxid umgesetzt wird.

Nebenkettenpolymeres $B_4$

Es wird Butadien und Styrol gleichzeitig polymerisiert, wobei ein verschmierter Block (tapered) entsteht, der mit Ethylenoxid umgesetzt wird.

Nebenkettenpolymeres $B_5$

Es wird analog ein Polystyrolpolymeres hergestellt, welches mit Ethylensulfid umgesetzt wird.

Nebenkettenpolymeres $B_6$

In einem 10 l Rührkessel werden 5230 g Toluol und 1000 g Butadien unter $N_2$-Atmosphäre und unter Ausschluß jeglicher Feuchtigkeit vorgelegt und anschließend auf 45°C erwärmt. Zur Beseitigung von Verunreinigungen, die den metallorganischen Initiator (sek.-Butyllithium) zerstören, wird die Reaktionsmischung solange portionsweise (5 ml) mit dem Initiator (1,2 Gew.% sek.-Butyllithium in Pentan) versetzt, bis ein Temperaturanstieg um ca. 0,5°C das Einsetzen der Polymerisation anzeigt. Durch unverzügliche Zugabe von 130 mmol Initiator wird jetzt die Polymerisation gestartet, die Kesselheizung wird auf 60°C eingestellt. Unter diesen Bedingungen wird 1 h lang polymerisiert. Anschließend wird die Polymerisation durch Zugabe von Ethylenoxid (5 %ig, gelöst in Toluol) abgebrochen. Das Polymere wies ein $\bar{M}_w$ von 9.600 auf. Es wird anschließend mit 1,3 g Ni-II-acetylacetonat, 35 g Toluol und 20,6 g Al-trisisobutyllösung (20 %ig in Hexan) versetzt und bei 80°C und 15 bar $H_2$-Druck hydriert. Nach 3 Stunden beträgt der Restgehalt an olefinischen Doppelbindungen weniger als 2 % (bestimmt nach Wijs mit Jodchlorid-Lösung).

Tabelle 1: Nebenkettenpolymere B erhalten durch anionische Polymerisation

| Polymer | Zusammensetzung (Gew.-Teile) | $\bar{M}_w$ |
|---|---|---|
| $B_1$ | PB-OH | 7.200 |
| $B_2$ | PS-OH | 20.000 |
| $B_3$ | PS-PB-OH (60/40) | 45.000 |
| $B_4$ | PB-tapered-PS-OH (30/70) | 36.000 |
| $B_5$ | PS-SH | 47.000 |
| $B_6$ | PB(H)-OH | 9.600 |

2. Herstellung von Hauptkettenpolymeren $A_1$ bis $A_3$

Hauptkettenpolymeres $A_1$

70 Teile Styrol, 25 Teile Acrylnitril und 20 Teile Ethylbenzol und gleichzeitig 5 Teile Maleinsäureanhydrid in 20 Teilen Methylethylketon werden kontinuierlich in einen gut gerührten Kessel gefahren und gleichzeitig die gleiche Menge kontinuierlich entnommen, wobei das Gemisch eine mittlere Verweilzeit von 5 h hat und bei 150°C und 11 bar thermisch ohne Starterzusatz polymerisiert. Das Gemisch wird über einen Extruder entgast und das Polymere granuliert ( $\bar{M}_w$ = 110.000).

Hauptkettenpolymeres $A_2$

Man polymerisiert, wie unter $A_1$ beschrieben, 65 Teile Styrol, 25 Teile Acrylnitril und 10 Teile Maleinsäureanhydrid ( $\bar{M}_w$ = 170.000).

Hauptkettenpolymeres $A_3$

Man polymerisiert analog $A_1$ 64 Teile Styrol, 23 Teile Acrylnitril, 5 Teile Methylmethacrylat und 8 Teile Maleinsäureanhydrid ( $\bar{M}_w$ = 190.000).

Beispiele 1 bis 8 (Polymere $P_1$ bis $P_8$)

Man löst die Hauptkettenpolymeren $A_n$ 10 %ig in einem Gemisch aus Toluol/DMF (9:1). Man versetzt die Lösung der Nebenkettenpolymeren $B_n$ mit 1 g Wasser und vereinigt die Lösungen von $A_n$ und $B_n$ in den in der Tabelle 2 genannten Anteilen. Nach 1 h Erhitzen auf 100°C dampft man die Lösungsmittel ab und erhält das erfindungsgemäße Copolymere.

Beispiele 9 und 10 (Polymere $P_9$ bis P10)

Man gewinnt das Nebenkettenpolymere, indem man die Lösung nach Zusatz von 1 g Wasser entgast. Die Polymeren $A_n$ und $B_n$ werden in einem Brabendermischer 15 min bei 150°C gemischt und anschließend wird das Molekulargewicht bestimmt.

Tabelle 2: Erfindungsgemäße Copolymere, hergestellt aus den Polymeren $A_n$ und $B_n$ (Gew.%)

| Polymere | | | | Copolymer $P_n$ | |
|---|---|---|---|---|---|
| $A_n$ | | $B_n$ | | P | $\bar{M}_w$ |
| 60 | $A_1$ | 40 | $B_1$ | $P_1$ | 137.000 |
| 80 | $A_2$ | 20 | $B_2$ | $P_2$ | 260.000 |
| 50 | $A_3$ | 50 | $B_4$ | $P_3$ | 280.000 |
| 60 | $A_3$ | 40 | $B_3$ | $P_4$ | 290.000 |
| 60 | $A_3$ | 40 | $B_5$ | $P_5$ | 275.000 |
| 75 | $A_1$ | 25 | $B_4$ | $P_6$ | 210.000 |
| 65 | $A_2$ | 35 | $B_6$ | $P_7$ | 270.000 |
| 60 | $A_3$ | 40 | $B_1$ | $P_8$ | 240.000 |
| 50 | $A_1$ | 50 | $B_3$ | $P_9$ | 195.000 |
| 30 | $A_2$ | 70 | $B_3$ | $P_{10}$ | 230.000 |

**Ansprüche**

1. Copolymere (Kammpolymere) mit mittleren Molekulargewichten (Gewichtsmittel $\bar{M}_w$ ) von 10.000 bis 2 Millionen, aufgebaut aus

A einem Polymeren einer Hauptkette, die 10 bis 90 Gew.%, bezogen auf das Copolymere, ausmacht und ein mitteres Molekulargewicht ( $\bar{M}_w$) von 8.000 bis 1 Million aufweist und das einpolymerisiert enthält

$a_1$ mindestens eine vinylaromatische Monomereinheit

und

$a_2$ mindestens eine weitere Monomereinheit

und

B mindestens einem Polymeren einer Nebenkette, wobei die Nebenketten 90 bis 10 Gew.%, bezogen auf das Copolymere, ausmachen und ein mittleres Molgewicht ( $\bar{M}_w$) von 2.000 bis 1 Million aufweisen und erhältlich sind durch anionische Polymerisation an sich bekannter Monomerer oder Gemischen von Monomeren mit Hilfe von Li-Alkylen unter anschließender Umsetzung des lebenden Anions mit einem Abbruchmittel,

dadurch gekennzeichnet, daß zum Aufbau des Polymeren A (Hauptkette) die weitere Monomereinheit $a_2$ aus der Gruppe der $\alpha,\beta$-ungesättigten Säuren, deren Estern, Halbestern oder Imiden ausgewählt wird und die Verknüpfung des Polymeren der Hauptkette A über mindestens eine Monomereinheit $a_2$ mit den Polymeren B der Nebenkette über eine vom Abbruchmittel gebildete funktionelle Gruppe erfolgt.

2. Copolymere (Kammpolymere) mit mittleren Molekulargewichten (Gewichtsmittel $\bar{M}_w$) von 10.000 bis 2 Millionen aufgebaut aus

A einem Polymeren einer Hauptkette, die 10 bis 90 Gew.%, bezogen auf das Copolymere ausmacht und ein mitteres Molekulargewicht ( $\bar{M}_w$) von 8.000 bis 1 Million aufweist und das einpolymerisiert enthält, jeweils bezogen auf A,

$a_1$ 40 bis 92 Gew.% mindestens einer vinylaromatischen Monomereinheit

$a_2$ 0,05 bis 30 Gew.% mindestens einer weiterer Monomereinheit

$a_3$ 8 bis 45 Gew.% einer eine Nitrilgruppe aufweisenden Monomereinheit

und

B mindestens einem Polymeren einer Nebenkette, wobei die Nebenketten 90 bis 10 Gew.%, bezogen auf das Copolymere, ausmachen und ein mittleres Molgewicht ( $\bar{M}_w$) von 2.000 bis 1 Million aufweisen und erhältlich sind durch anionische Polymerisation an sich bekannter Monomerer oder Gemischen von Monomeren mit Hilfe von Li-Alkylen unter anschließender Umsetzung des lebenden Anions mit einem Abbruchmittel,

dadurch gekennzeichnet, daß zum Aufbau des Polymeren A (Hauptkette) die weitere Monomereinheit $a_2$ aus der Gruppe der $\alpha,\beta$-ungesättigten Säuren, deren Estern, Halbestern oder Imiden ausgewählt wird und die Verknüpfung des Polymeren der Hauptkette A über mindestens eine Monomereinheit $a_2$ mit den Polymeren B der Nebenkette über eine vom Abbruchmittel gebildete funktionelle Gruppe erfolgt.

3. Copolymere (Kammpolymere) mit mittleren Molekulargewichten (Gewichtsmittel $\bar{M}_w$) von 20.000 bis 600.000 aufgebaut aus

A einem Polymeren einer Hauptkette, die 20 bis 80 Gew.%, bezogen auf das Copolymere, ausmacht und ein mitteres Molekulargewicht ( $\bar{M}_w$ ) von 10.000 bis 200.000 aufweist und das einpolymerisiert enthält, jeweils bezogen auf A,

$a_1$ 50 bis 90 Gew.% mindestens einer vinylaromatischen Monomereinheit

$a_2$ 2 bis 15 Gew.% mindestens einer weiteren Monomereinheit

$a_3$ 15 bis 40 Gew.% einer eine Nitrilgruppe aufweisenden Monomereinheit

und

B mindestens einem Polymeren einer Nebenkette, wobei die Nebenketten 80 bis 20 Gew.%, bezogen auf das Copolymere, ausmachen und ein mittleres Molgewicht ( $\bar{M}_w$) von 3.000 bis 200.000 aufweisen und erhältlich sind durch anionische Polymerisation an sich bekannter Monomerer oder Gemischen von Monomeren mit Hilfe von Li-Alkylen unter anschließender Umsetzung des lebenden Anions mit einem Abbruchmittel,

dadurch gekennzeichnet, daß zum Aufbau des Polymeren A (Hauptkette) die weitere Monomereinheit $a_2$ aus der Gruppe der $\alpha,\beta$-ungesättigten Säuren, deren Estern, Halbestern oder Imiden ausgewählt wird und die Verknüpfung des Polymeren der Hauptkette A über mindestens eine Monomereinheit $a_2$ mit den Polymeren B der Nebenkette über eine vom Abbruchmittel gebildete funktionelle Gruppe erfolgt.

4. Copolymere (Kammpolymere) mit mittleren Molekulargewichten (Gewichtsmittel $\bar{M}_w$) von 20.000 bis 600.000 aufgebaut aus

A einem Polymeren einer Hauptkette, die 20 bis 80 Gew.%, bezogen auf das Copolymere, ausmacht und ein mitteres Molekulargewicht ( $\bar{M}_w$) von 10.000 bis 200.000 aufweist und das einpolymerisiert enthält, jeweils bezogen auf A,

$a_1$ 50 bis 90 Gew.% mindestens einer vinylaromatischen Monomereinheit, die aus der Gruppe von Styrol, $\alpha$-Methylstyrol, den kernalkylierten Methylstyrolen oder Mischungen davon ausgewählt wird

$a_2$ 2 bis 15 Gew.% mindestens einer weiterer Monomereinheit

$a_3$ 15 bis 40 Gew.% Acrylnitril oder Methacrylnitril

und

B mindestens einem Polymeren einer Nebenkette, wobei die Nebenketten 80 bis 20 Gew.%, bezogen auf das Copolymere, ausmachen und ein mittleres Molgewicht ( $\bar{M}_w$) von 3.000 bis 200.000 aufweisen und erhältlich sind durch anionische Polymerisation von Butadien, Styrol oder Gemischen davon mit Hilfe von Li-Alkylen unter anschließender Umsetzung des lebenden Anions mit Ethylenoxid oder Ethylensulfid als Abbruchmittel,

dadurch gekennzeichnet, daß zum Aufbau des Polymeren A der Hauptkette als weitere Monomereinheit $a_2$ Maleinsäureanhydrid ausgewählt wird und wobei die Verknüpfung des Polymeren der Hauptkette A über mindestens eine Monomereinheit $a_2$ mit den Polymeren B der Nebenkette über die vom Abbruchmittel gebildete funktionelle Gruppe erfolgt.

5. Copolymeres nach Ansprüchen 3 und 4, dadurch gekennzeichnet, daß das Polymere A zusätzlich

$a_4$ 1 bis 40 Gew.% einer Monomereinheit einpolymerisiert enthält die aus der Gruppe der Ester der (Meth)acrylsäure mit 1 bis 8 C-Atomen, den zugrundeliegenden Säuren selbst oder den Amiden der (Meth)acrylsäure ausgewählt wird.

6. Copolymere nach Anspruch 1, dadurch gekennzeichnet, daß diese zusätzlich bis zu 40 Gew.%, bezogen auf das Copolymere, mindestens ein von B verschiedenes Polymeres C als Nebenkette aufweisen, das über eine terminale funktionelle Gruppe an die Monomereinheit $a_2$ der Hauptkette gebunden ist.

7. Verfahren zur Herstellung von Copolymeren gemäß Ansprüchen 1 bis 5 durch Umsetzen von Lösungen von durch anionische Polymerisation erzeugten lebenden Anionen des Polymeren B (B-Li) mit Abbruchmitteln aus der Gruppe von Ethylenoxid oder Ethylensulfid unter Bildung von funktionelle Endgruppen aufweisenden Polymeren ($B-CH_2CH_2(O)S-Li$) in Gegenwart von Lösungen der Polymeren A der Hauptkette und unter Zusatz von Protonen liefernden Mitteln bei Temperaturen im Bereich von 20 bis 150°C unter Entfernung von flüchtigen Bestandteilen und unter intensivem Rühren.

8. Verwendung von Copolymeren gemäß Anspruch 1 zur Herstellung von Mischungen mit anderen Polymeren.

9. Verwendung von Copolymeren gemäß Ansprüchen 1 und 8 zur Herstellung von Formteilen.

10. Formteile aus Copolymeren gemäß Anspruch 1.